# EUROPEAN PATENT SPECIFICATION

(11) **EP 1 285 331 B1**
(45) Date of publication and mention of the grant of the patent: **09.06.2010**
(21) Application number: 01931989.6
(22) Date of filing: 14.05.2001
(51) Int. Cl.: G06F 3/033

(54) **A METHOD AND APPARATUS TO BROWSE AND ACCESS DOWNLOADED CONTEXTUAL INFORMATION**
VERFAHREN UND VORRICHTUNG ZUM SICHTEN UND ZUGREIFEN NACHGELADENER KONTEXTABHÄNGIGER INFORMATIONEN
PROCEDE ET DISPOSITIF DESTINES A ACCEDER A DES INFORMATIONS CONTEXTUELLES TELECHARGEES ET A LES CONSULTER

(30) Priority: 16.05.2000 US 572677
(43) Date of publication of application: 26.02.2003
(60) Divisional application: 10160495.7
(73) Proprietor: Nokia Corporation, 00045 Espoo (FI)
(72) Inventor: SUOMELA, Riku, FIN-33200 Tampere (FI)
(74) Representative: Swindell & Pearson Limited
(86) International application number: PCT/IB2001/000832
(87) International publication number: WO 2001/088687

(56) References cited:
- WO-A-97/07467
- DE-A- 19 837 568
- GB-A- 2 298 539
- REKIMOTO J: "TILTING OPERATIONS FOR SMALL SCREEN INTERFACES (TECH NOTE)" UIST '96. 9TH ANNUAL SYMPOSIUM ON USER INTERFACE SOFTWARE AND TECHNOLOGY. PROCEEDINGS OF THE ACM SYMPOSIUM ON USER INTERFACE SOFTWARE AND TECHNOLOGY. SEATTLE, WA, NOV. 6 - 8, 1996, ACM SYMPOSIUM ON USER INTERFACE SOFTWARE AND TECHNOLOGY, NEW YORK, NY, 6 November 1996 (1996-11-06), pages 167-168, XP000728632 ISBN: 0-89791-798-7

## Description

### BACKGROUND OF THE INVENTION

### 1. Field of the Invention

The present invention relates to a device and method for browsing and accessing contextual data in a user device.

### 2. Description of the Related Art

A device and method for presenting information related to objects being addressed is disclosed in PCT references WO 99/42946 and WO99/42947.
According to these references, a system includes a database with geometric descriptions of objects. Based on where the user is and the vector corresponding to where the user is pointing, the system determines the object of interest. For example, if a user is determined to be at a specific location in a city and the user points to a hotel, the vector passes through the geometric description of the hotel in the database. Accordingly, the devices of these references merely determine what space is being addressed and imply that particular objects are being addressed by way of the association of objects to spatial definitions or geometric descriptors in the database.

WO 97/07467 discloses a computer system for identifying local resources in which an overlay showing the locations of requested resources is superimposed on a map. One or more of the icons may be opened by clicking on the icon. Rekimoto, J., "Tilting Operations of Small Screen Interfaces", UIST '96 Seattle, Washington, USA, discloses that the tilt of a user equipment may be used as an input device. GB 2 298 539 discloses a hand held guidance device including a position locating means for determining a location of the device and a display for displaying the established position on a digitized map of the local surroundings. DE 198 37 568 discloses a pocket computer for use as a personal digital and navigation assistant.

A problem with many of these devices is that a user is required to point to a landmark or point of interest and query the system to determine what objects are retrievable in that direction. In other words, the user does not know whether an object is in the database until the user points at the object.

Furthermore, none of these prior art references disclose the definition of a target area, in terms of its size or orientation with respect to the user equipment, in which to locate virtual objects. Instead, these devices look for all virtual objects within a predefined zone surrounding the location.

### SUMMARY OF THE INVENTION

It is an object of the present invention to provide a method for accessing data by providing a preview of a collection of virtual objects related to the user's surroundings and allowing easy access to their contents.

According to the present invention, a method for browsing and accessing contextual information with a user equipment, said contextual information containing virtual objects related to an area surrounding the user equipment, comprises determining a location of the user equipment, downloading, at the user equipment, contextual information containing virtual objects corresponding to real objects in a selected area surrounding the user equipment from a database accessible through a network, generating a visual user interface at the user equipment for displaying the downloaded contextual information, determining an orientation of the user equipment, selecting one of the virtual objects in a target space of the visual user interface, according to said orientation, the target space corresponding to a front of the user equipment and opening the selected virtual object by retrieving the contextual information associated with the selected virtual object.

The contextual information contains information related to actual objects within a neighborhood surrounding the user equipment. The information about each object may include a name, a geographical location and a URL from which content can be retrieved. Once the orientation is known, a visual user interface can be generated at the user equipment for displaying the contextual information that has been downloaded in a virtual representation of the neighborhood of the user equipment. One such representation may be a horizontal strip compass display onto which icons of the objects are displayed at positions corresponding to their actual relative directions. Another representation is a plan view, i.e., a bird's eye view, of a map onto which object icons are superimposed. To select one of the virtual objects displayed, the user can point to one of the virtual objects in the visual user interface by orienting the user equipment accordingly. That is, the user manipulates at least a portion of the user equipment until the front of the user equipment "faces" the object to be selected. The display shows a target area which is an area in front of the user equipment. A virtual object is selected by orienting the user equipment until the virtual object to be selected is within the target area.
Once selected, the virtual object can be opened by actuating an activation button.
The content of the selected virtual objects may be stored in the user equipment and/or immediately wirelessly downloaded from a database at the server of the wireless system or from an internet web page retrieved from the URL associated with the one of the virtual objects. The content, or at least a portion thereof, is then visualized on the display of the user equipment.

Said downloading may comprise determining a size of the selected area surrounding the user equipment relative to at least one of a speed of movement of the user equipment and a density of virtual objects

The invention also provides a user equipment for browsing and accessing contextual information stored in a database accessible through a wireless network, comprising means for wireless communication with the wireless network, a display, an input device, a compass for determining the orientation of the user equipment, a CPU comprising means for downloading contextual information from the database corresponding to real objects, said contextual information including virtual objects related to real objects in a selected area surrounding a location of the user equipment, and means for displaying the virtual objects on said display relative to a position of the user equipment, means for selecting one of the virtual objects according to the orientation of the user equipment, where the selected virtual object is in a target space in the display corresponding to a front of the user equipment and means for accessing the selected virtual object by retrieving the contextual information associated with the selected virtual object and displaying the retrieved contextual information on the display in response to an actuation of said input device.

The user equipment may comprise a mobile phone, a personal digital assistant or a wearable computer with a headmounted display. Furthermore, either the network or the user equipment must have a location detector for determining the location of the user equipment so that the applicable contextual data can be downloaded.

This aspect also provides a context compass system for browsing and accessing contextual information, comprising said user equipment, a database accessible through a wireless network, the database comprising contextual information corresponding to real objects and a location service comprising means for determining a location of said user equipment.

Other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

### BRIEF DESCRIPTION OF THE DRAWINGS

In the drawings:
Fig. 1 is a schematic diagram showing the user equipment and network according to the present invention;
Fig. 2 is a signal flow diagram showing the basic method for browsing and accessing contextual data according to the present invention;
Fig. 3a and 3b show a display of a user equipment with contextual data and the user equipment;
Figs. 4a and 4b show the display and user equipment of Figs. 3a and 3b after the user equipment has been reoriented to the right;
Figs. 5a and 5b show the display when more than one virtual object are in a target area of the display;
Fig. 6 shows a display of the user equipment when the user equipment when a map and a linear compass are simultaneously displayed; and
Fig. 7 shows a view from a head mounted display of a user equipment.

### DETAILED DESCRIPTION OF THE PRESENTLY PREFERRED EMBODIMENTS

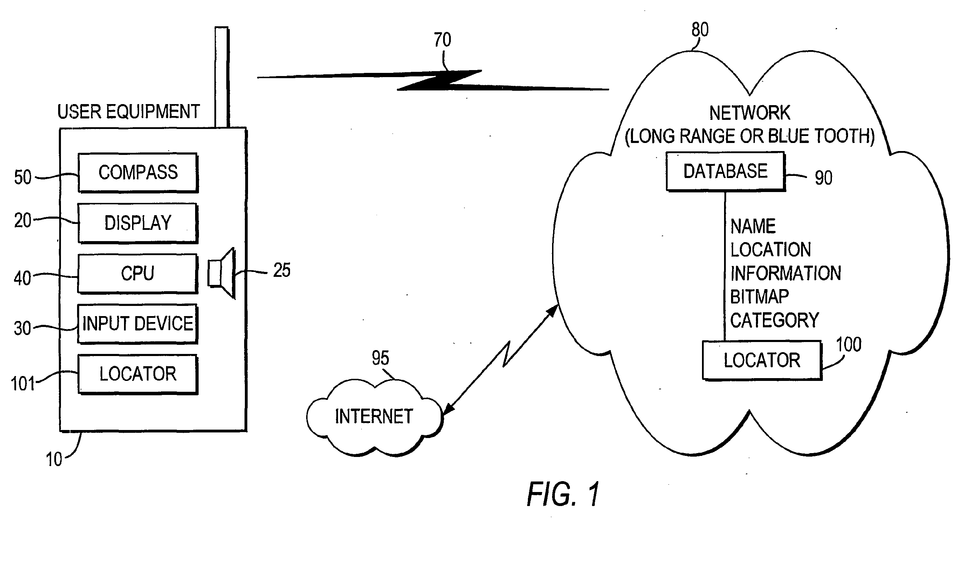

Fig. 1 is a block diagram showing a system in which the present invention is incorporated. A user equipment (UE) 10 comprises a mobile device with a display 20, a speaker 25 for providing audio signals to a user, an input device 30, a CPU 40, and a compass 50 for determining the orientation of the UE 10. The UE 10 is connected via a wireless connection 70 to a network 80 comprising a database 90 and a location service 100 for determining the geographic location of the UE 10.

Although the location service 100 is shown as being in the same network as the database 90, the location service may be a separate network or may be a separate system. For example, the location service 100 may comprise a Global Positioning Satellite (GPS) system in which a locator 101 is arranged in the user equipment 10. In Blue Tooth or other short range system, the locator 100 may be in the network and tell the user its position based on the connection. Furthermore, any locating system which utilizes the Base Transceiver Stations (BTSs) of a mobile communication system such as the Time of Arrival (TOA) positioning method, or the Observed Time Difference (OTD) positioning method (These positioning methods are described in technical specification GSM 03.71, version 7.2.1) may also be used. The location system 100 may comprise a cell ID based positioning method, Angle of Arrival (AOA) (see technical specification 3G TS 25.305, version 3.1.0), or any other method which may be used to determine the location of the UE 10. The network 80 may comprise a long range network such as those used for mobile phones or a short range network such as Blue Tooth.
Furthermore, the network 80 may be connected to the internet 95. The UE 10 may comprise any type of mobile computing device such as personal digital assistants (PDAs) or a mobile phone with computing abilities.
Furthermore, the UE 10 may comprise a wearable computer
wherein the display 20 comprises a head-mounted display which allows the user to see a virtual data while simultaneously viewing the real world.

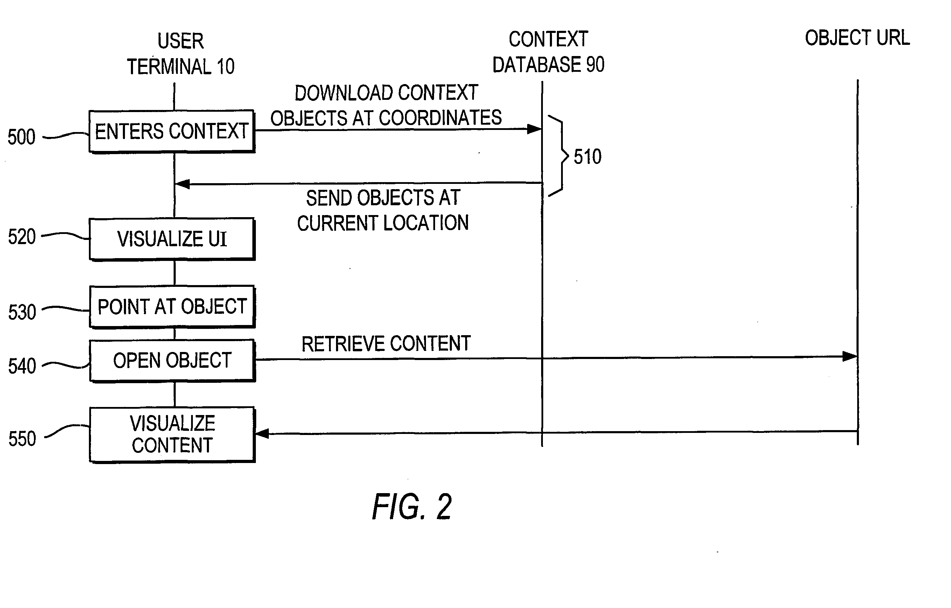

Referring to Fig. 2, the process of browsing and accessing contextual information according to the present invention is as follows: a location service 100 determines the geographic location of the UE, step 500. The coordinates are transmitted to the database 90 or are used in conjunction with the database 90 to download contextual data from the database 90 to the UE 10, step 510. The contextual data is a collection of virtual objects corresponding to real objects within a limited area surrounding the user's actual location. For each virtual object, the database preferably contains a record comprising at least a name of the object, a geographic location of the object in the real world, and information concerning the object. Instead of storing the information concerning the object, the database may instead or in addition include an internet address such as a Uniform Resource Locator (URL) or other remote computer address. The record may also contain a bit map for displaying an icon of the object. Furthermore, the record may also contain a type of object, i.e., a field in which a classification or category of the object is listed.

The downloaded contextual data may comprise all virtual objects in the database 90 within an area surrounding the user's location. The user may also select the size of the area of interest. For example, if the user is in a museum, the objects would include the artwork within the room in which the user is standing. The contextual data may alternatively include only those virtual objects in the database 90 which meet some criteria of the user. For example, the user may be looking for lodging for the night. Accordingly, the contextual data will include hotels, bed and breakfast inns, motels, hostels, and other places in which the user may stay for the night. In another example, the user may be looking for food and the contextual data will include restaurants and diners in the user's current neighborhood. To accomplish this, the records of the contextual data must include information in the classification field or category field.

Instead of static objects, such as buildings, monuments, or other points of interest, the objects may comprise dynamic objects such as the UE of a friend or the location of public transportation such as a bus or train.

When downloading the contextual data, the size of the limited area surrounding the user equipment must be known. The size may comprise a default value or may be based on criteria such as the speed of the movement of the user equipment and/or the density of virtual objects in the area. Furthermore the size may be user selectable via the input device 30. For example, if a user is standing still or moving at a walking pace, the area may comprise a relatively small radius such as 50-1000 meters. However, if the user is travelling faster such as at the speed of a motor vehicle on a highway, the area may comprise a larger radius such as 10 kilometers.

Furthermore, the density of virtual objects is likely to be greater in a city. Therefore, when the user is in a city, the limited area may be smaller than when a user is in a rural or suburban area. There may be a limit as to the capacity of virtual objects the user equipment can hold or display at one time. Accordingly, the limited area may also be adjusted based on the capacity of the user equipment to hold or display the contextual data.

Once the contextual data is downloaded, the compass 50 determines the direction in which the UE 10 is pointing and displays the accessible virtual objects that are within the limited area, step 520. The virtual object directly in front of the user is highlighted or selected and can be accessed by pushing or otherwise actuating an activation button on the input device 30. As the UE 10 changes orientation, different virtual objects move in front of the user. Therefore, to select or point to a virtual object to be accessed the user merely changes the orientation of the UE 10 until the virtual object to be accessed lies in a target space or a selection area in front of the UE 10, i.e., the user aligns the UE 10 with the virtual object to accessed, step 530. The input device 30 may then be actuated to open the selected object, i.e., retrieve the content of the selected object associated with the selected object, step 540. Finally, the content is displayed on the display, step 550.

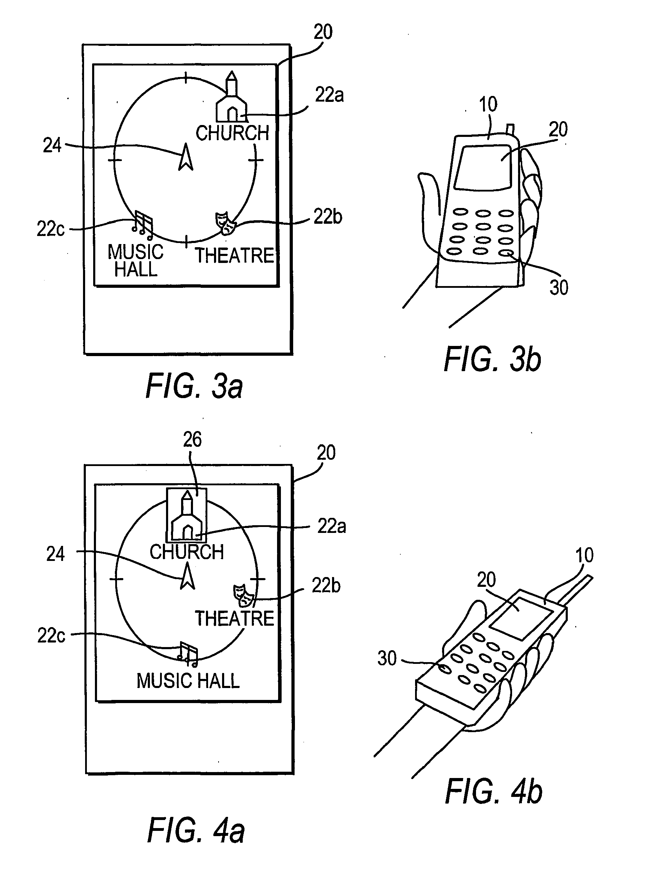

Fig. 3a shows the display 20 when the UE 10 is a mobile phone. In this display, the orientation of the UE 10 is shown by an arrow 24. Fig. 3b shows the position of the UE 10. Here, a church is to the right of the UE 10 and a music hall and a theatre are behind the UE 10. Fig. 4a shows the display 20 and Fig. 4b shows the relative position of the UE 10 after the UE has been rotated to the right so that the church icon 22a is now in a target space 26 in front of the UE 10. Accordingly, the church icon 22a is now highlighted and can be accessed by pushing a button on the input device 30 of the mobile phone associated with that function.

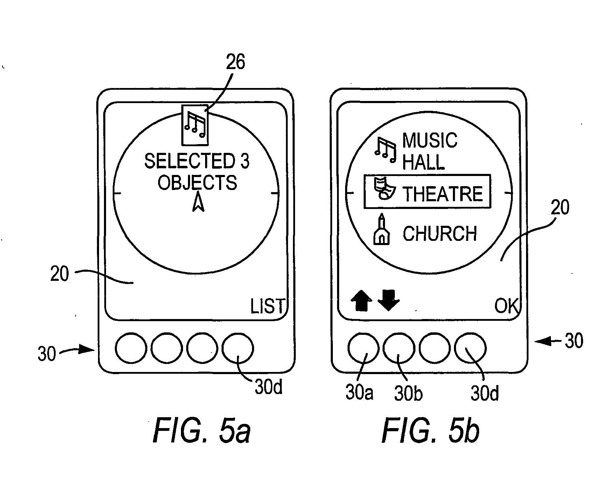

Since the amount of information that can be displayed on a mobile phone display is limited, only one object is shown in one direction. However, if more than one object lies in front of the user, the user may be informed of this visually and/or aurally and a list may be displayed so that the user can choose which object in the target space 26 is to be accessed. Fig. 5a shows the display 20 when more than one object is in front of the UE 10. A button 30d and the input device 30 associated with the list function may be actuated to show the list of selected objects. Fig. 5b shows the display 20 when the list of selected objects are shown. The input device 30 may have buttons 30a and 30b associated with up and down functions to select an item on the list. Furthermore, the button 30d or any other button on the input device 30 may function as an activation button for activating the selected virtual object when the list display is shown.

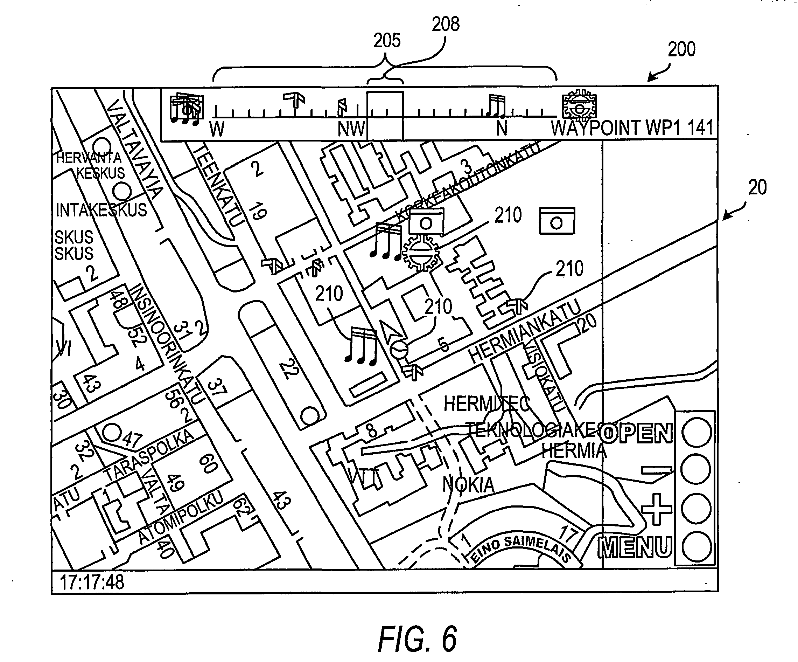

Referring to Fig. 6, when the UE 10 comprises a PDA, the display 20 shows more details. In this embodiment, the display 20 may show a map showing the virtual objects 210 surrounding the user. The top of the display 20 comprises a linear compass 200 which shows objects in a field-of-view 205 in front of the user. In Fig. 6, the field-of-view 205 of the linear compass 200 covers an angle of approximately 110 degrees. However, a larger or smaller field of view 205 could also be used depending on the particular application or the user's preference up to and including 360 degrees. In this embodiment, virtual objects 210 are shown as icons on the display at a location of the real objects they are associated with. The icons are also shown in the linear compass 200 based on the direction to them from the user equipment. Accordingly, if the field-of-view is less than 360 degrees, only those icons associated with real objects within the field of view will be displayed. As in the previous embodiment, the user selects an object by pointing the UE 10, i.e., aligning the UE 10 so that the object is in front of the UE 10. In this embodiment, an object is selected when it is aligned within a target area 208 on the linear compass 200. The target area 208 is aligned with the front of the UE10.

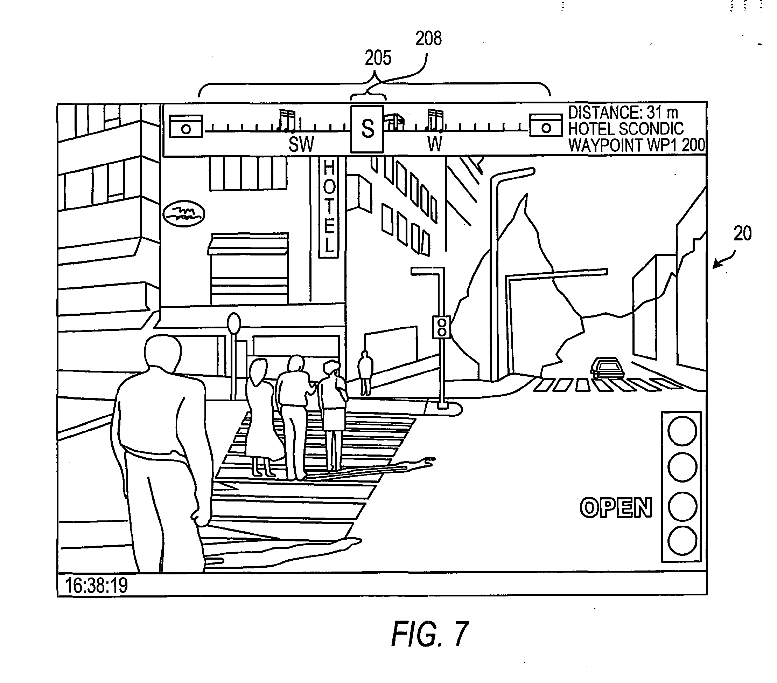

In another embodiment shown in Fig. 7, the display comprises a head mounted display which allows the user to see virtual data while simultaneously viewing the real world. These head-mounted displays are commercially available. In this embodiment, the user views the linear compass 200 while simultaneously viewing the real world. The linear compass 200 shows the user the virtual objects within the field-of-view 205 of the compass that are accessible. In this embodiment, the user wears the display which must have mounted thereto an actual compass.
Accordingly, the user selects objects by rotating his head. In Fig. 7, the user has selected the Hotel Scandic. If the user wishes to access the virtual object, the input device (not shown in Fig. 7) is actuated. Fig. 7 further shows that the linear compass 200 may show an information area 215 in which information regarding the selected virtual object is displayed such as distance of the selected virtual object from the user location, name of the selected virtual object, and the compass point of the selected virtual object.

In each of the above examples, the network has been a long range network. However, a short range network such as Blue Tooth may also be used in indoor applications. For example, instead of displaying points of interest in a city, the short range system may display other electronic devices in a room with which the UE 10 can communicate such as a telephone, a printer, or a coffee maker.

Thus, while there have shown and described and pointed out fundamental novel features of the invention as applied to a preferred embodiment thereof, it will be understood that various omissions and substitutions and changes in the form and details of the devices illustrated, and in their operation, may be made by those skilled in the art without departing from the scope of the invention. For example, it is expressly intended that all combinations of those elements and/or method steps which perform substantially the same function in substantially the same way to achieve the same results are within the scope of the invention.

Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A method for browsing and accessing contextual information with a user equipment (10), said contextual information containing virtual objects related to an area surrounding the user equipment (10), said method comprising:
determining (500) a location of the user equipment (10);
determining an orientation of the user equipment (10);
downloading (510), at the user equipment (10), contextual information containing virtual objects (210) corresponding to real objects in a selected area surrounding the user equipment (10) from a database (90) accessible through a network (80);
generating (520) a visual user interface at the user equipment (10) for displaying the downloaded contextual information downloaded;
selecting one of the virtual objects (210) in a target space (26) of the visual user interface, according to said orientation, the target space (26) corresponding to a front of the user equipment (10); and
opening (540) the selected virtual object (210) by retrieving the contextual information associated with the selected virtual object (210).

2. The method of claim 1, wherein said downloading of the contextual information comprises determining a size of the selected area surrounding the user equipment (10) relative to at least one of:
a speed of movement of the user equipment (10); and
a density of virtual objects (210).

3. The method of claim 1 or 2, further comprising:
displaying (550) the contextual information for the selected virtual object (210).

4. The method of claim 1 or 2, further comprising submitting criteria for contextual information to the database before said downloading of the contextual information and wherein said downloading of the contextual information includes downloading only selected virtual objects (210) in the selected area surrounding the user equipment (10) that meet the submitted criteria.

5. The method of claim 3, wherein said generation of the visual user interface comprises displaying a linear compass (200) in the visual user interface having a field of view and displaying the virtual objects (210) on the linear compass (200) at positions corresponding to their direction relative to the position of the user equipment (10).

6. The method of claim 5, wherein said displaying of the linear compass (200) comprises displaying a direction in front of the user equipment (10) at a center of the field of view.

7. The method of claim 5, wherein said displaying of the linear compass (200) comprises displaying the linear compass (200) on a head worn display and allowing a user to simultaneously view the virtual objects (210) and the real world.

8. The method of claim 3, further comprising displaying a distance from the user equipment (10) to a real object corresponding to the selected virtual object (210).

9. The method of claim 3, wherein said opening of the selected virtual object (210) comprises retrieving information for the selected virtual object (210) from the database (90) in the network (80).

10. The method of claim 3, wherein said opening of the selected virtual object (210) comprises retrieving information for the selected virtual object (210) from another database in one of the network (80) and a computer in another network (95).

11. The method of claim 3, wherein said opening of the selected virtual object (210) comprises retrieving information for the selected virtual object (210) using a URL associated with the selected virtual object (210).

12. The method of claim 1, wherein said downloading of the contextual information comprises downloading contextual information for each real object comprises downloading a name of the real object, a geographical location of the real object and one of content related to the real object and an address pointing to content related to the real object.

13. The method of claim 12, wherein said downloading of the contextual information further comprises downloading a field listing a category of each real object.

14. A user equipment (10) for browsing and accessing contextual information stored in a database (90) accessible through a wireless network, comprising:
means for wireless communication with the wireless network;
a display (20);
an input device (30);
a compass (50) for determining an orientation of the user equipment (10);
a CPU (40) comprising means for downloading contextual information from the database corresponding to real objects, said contextual information including virtual objects (210) related to real objects in a selected area surrounding a location of the user equipment (10), and means for displaying the virtual objects (210) on said display (20) relative to a position of the user equipment (10);
means for selecting one of the virtual objects (210) according to the orientation of the user equipment (10), wherein the selected virtual object (210) is in a target space (26) in the display (20) corresponding to a front of the user equipment (10); and
means for accessing the selected virtual object (210) by retrieving the contextual information associated with the selected virtual object (210) and displaying the retrieved contextual information on the display (20) in response to an actuation of said input device (30).

15. The user equipment (10) of claim 14, wherein said user equipment (10) comprises a wearable computer and said display (20) comprises a head-mounted display allowing simultaneous viewing of the virtual objects (210) and the real world.

16. The user equipment (10) of claim 14, wherein said downloaded contextual information comprises a name, a geographic location, and one of content associated with each of the virtual objects (210) and an address pointing to content associated with each of the virtual objects (210).

17. The user equipment (10) of claim 16, wherein said contextual information further comprises a field listing a category of each of the virtual objects (210).

18. The user equipment (10) of claim 17, wherein said CPU (40) comprises means for selecting a subgroup of virtual objects (210) within the selected area surrounding the location of said user equipment (10) by the category.

19. The user equipment (10) of claim 14, wherein a size of said selected area surrounding the location of said user equipment (10) is dependent on a speed of movement of said user equipment (10).

20. The user equipment (10) of claim 14, wherein a size of said selected area surrounding the location of said user equipment (10) is dependent on a density of said virtual objects (210).

21. The user equipment (10) of claim 14, comprising a locator (101) for use in determining a location of the user equipment (10).

22. A context compass system for browsing and accessing contextual information, comprising:
a database (90) accessible through a wireless network, the database (80) comprising contextual information corresponding to real objects;
a user equipment (10) according to any one of claims 14, 15, 18, 19, 20 or 21; and
a location service (100) comprising means for determining a location of said user equipment (10).

23. The context compass system of claim 22, wherein said database (90) comprises a name, a geographic location and information for each of the virtual objects (210).

24. The context compass system of claim 23, wherein said database (90) further comprises a field listing a category of each of the virtual objects (210).

25. The context compass system of claim 23, wherein said information for each of the virtual objects (210) comprises one of content related to the each of the virtual objects (210) and an address pointing to content related to the each of the virtual objects (210).

## Patentansprüche

1. Verfahren zum Durchsuchen von und Zugreifen auf Kontextinformationen mit einer Benutzerausrüstung (10), wobei die Kontextinformationen virtuelle Objekte enthalten, die sich auf einen Bereich beziehen, der die Benutzerausrüstung (10) umgibt, wobei das Verfahren umfasst:
- Bestimmen (500) eines Orts der Benutzerausrüstung (10);
- Bestimmen einer Ausrichtung der Benutzerausrüstung (10);
- Herunterladen (510), an der Benutzerausrüstung (10), von Kontextinformationen, die virtuelle Objekte (210) enthalten, die realen Objekten in einem ausgewählten Bereich entsprechen, der die Benutzerausrüstung (10) umgibt, von einer Datenbank (90), auf die durch ein Netzwerk zugegriffen werden kann;
- Erzeugen (520) einer visuellen Benutzerschnittstelle an der Benutzerausrüstung (10) zum Anzeigen der heruntergeladenen Kontextinformationen;
- Auswählen von einem der virtuellen Objekte (210) in einem Zielraum (26) der visuellen Benutzerschnittstelle, gemäß der Ausrichtung, wobei der Zielraum (26) einer Front der Benutzerausrüstung (10) entspricht; und
- Öffnen (540) des ausgewählten virtuellen Objekts (210) durch Abrufen der Kontextinformationen, die mit dem ausgewählten virtuellen Objekt (210) verknüpft sind.

2. Verfahren nach Anspruch 1, wobei das Herunterladen der Kontextinformationen ein Bestimmen einer Größe des ausgewählten Bereichs, der die Benutzerausrüstung (10) umgibt, in Bezug auf mindestens eins der folgenden umfasst:
- einer Bewegungsgeschwindigkeit der Benutzerausrüstung (10); und
- eine Dichte von virtuellen Objekten (210).

3. Verfahren nach Anspruch 1 oder 2, weiter umfassend:
- Anzeigen (550) der Kontextinformationen für das ausgewählte virtuelle Objekt (210).

4. Verfahren nach Anspruch 1 oder 2, weiter umfassend ein Vorlegen von Kriterien für Kontextinformationen an die Datenbank vor dem Herunterladen der Kontextinformationen, und wobei das Herunterladen der Kontextinformationen ein Herunterladen nur von ausgewählten virtuellen Objekten (210) in dem ausgewählten Bereich umfasst, der die Benutzerausrüstung (10) umgibt, welche die vorgelegten Kriterien erfüllen.

5. Verfahren nach Anspruch 3, wobei das Erzeugen der visuellen Benutzerschnittstelle ein Anzeigen eines linearen Kompasses (200) in der visuellen Benutzerschnittstelle mit einem Sichtfeld, und Anzeigen der virtuellen Objekte (210) auf dem linearen Kompass (200) an Positionen umfasst, die deren Richtung in Bezug auf den Ort der Benutzerausrüstung (10) entsprechen.

6. Verfahren nach Anspruch 5, wobei das Anzeigen des linearen Kompasses (200) ein Anzeigen einer Richtung vor der Benutzerausrüstung (10) in der Mitte des Sichtfelds umfasst.

7. Verfahren nach Anspruch 5, wobei das Anzeigen des linearen Kompasses (200) ein Anzeigen des linearen Kompasses (200) auf einer am Kopf getragenen Anzeige umfasst, und es umfasst, einem Benutzer zu ermöglichen, gleichzeitig die virtuellen Objekte (210) und die reale Welt zu betrachten.

8. Verfahren nach Anspruch 3, weiter umfassend ein Anzeigen einer Entfernung von der Benutzerausrüstung (10) zu einem realen Objekt, das dem ausgewählten virtuellen Objekt (210) entspricht.

9. Verfahren nach Anspruch 3, wobei das Öffnen des ausgewählten virtuellen Objekts (210) ein Abrufen von Informationen für das ausgewählte virtuelle Objekt (210) von der Datenbank (90) in dem Netzwerk (80) umfasst.

10. Verfahren nach Anspruch 3, wobei das Öffnen des ausgewählten virtuellen Objekts (210) ein Abrufen von Informationen für das ausgewählte virtuelle Objekt (210) von einer anderen Datenbank in dem Netzwerk (80) oder einem Computer in einem anderen Netzwerk (95) umfasst.

11. Verfahren nach Anspruch 3, wobei das Öffnen des ausgewählten virtuellen Objekts (210) ein Abrufen von Informationen für das ausgewählte virtuelle Objekt (210) unter Verwendung einer URL umfasst, die mit dem ausgewählten virtuellen Objekt (210) verknüpft ist.

12. Verfahren nach Anspruch 1, wobei das Herunterladen der Kontextinformationen ein Herunterladen von Kontextinformationen für jedes reale Objekt umfasst, umfassend Herunterladen eines Namens des realen Objekts, eines geographischen Orts des realen Objekts und von Inhalt, der sich auf das reale Objekt bezieht oder einer Adresse, die auf Inhalt verweist, der sich auf das reale Objekt bezieht.

13. Verfahren nach Anspruch 12, wobei das Herunterladen der Kontextinformationen weiter ein Herunterladen eines Felds umfasst, das eine Kategorie jedes realen Objekts auflistet.

14. Benutzerausrüstung (10) zum Durchsuchen von und Zugreifen auf Kontextinformationen, die in einer Datenbank (90) gespeichert sind, auf die durch ein drahtloses Netzwerk zugegriffen werden kann, umfassend:
- Mittel für drahtlose Kommunikation mit dem drahtlosen Netzwerk;
- eine Anzeige (20);
- eine Eingabevorrichtung (30);
- einen Kompass (50) zum Bestimmen einer Ausrichtung der Benutzerausrüstung (10);
- eine CPU (40), umfassend Mittel zum Herunterladen von Kontextinformationen von der Datenbank, die realen Objekten entsprechen, wobei die Kontextinformationen virtuelle Objekte (210) enthalten, die realen Objekten in einem ausgewählten Bereich entsprechen, der einen Ort der Benutzerausrüstung (10) umgibt, und Mittel zum Anzeigen der virtuellen Objekte (210) auf der Anzeige (20) in Bezug auf eine Position der Benutzerausrüstung (10);
- Mittel zum Auswählen von einem der virtuellen Objekte (210) gemäß der Ausrichtung der Benutzerausrüstung (10), wobei das ausgewählte virtuelle Objekt (210) sich in einem Zielraum (26) in der Anzeige (20) befindet, entsprechend einer Front der Benutzerausrüstung (10); und
- Mittel zum Zugreifen auf das ausgewählte virtuelle Objekt (210) durch Abrufen der Kontextinformationen, die mit dem ausgewählten virtuellen Objekt (210) verknüpft sind, und Anzeigen der abgerufenen Kontextinformationen auf der Anzeige (20), in Reaktion auf eine Betätigung der Eingabevorrichtung (30).

15. Benutzerausrüstung (10) nach Anspruch 14, wobei die Benutzerausrüstung (10) einen tragbaren Computer umfasst und die Anzeige (20) eine am Kopf getragene Anzeige umfasst, die ein gleichzeitiges Betrachten der virtuellen Objekte (210) und der realen Welt ermöglicht.

16. Benutzerausrüstung (10) nach Anspruch 14, wobei die heruntergeladenen Kontextinformationen einen Namen, einen geographischen Ort und Inhalt, der mit jedem der virtuellen Objekte (210) verknüpft ist, oder eine Adresse umfassen, die auf Inhalt verweist, der mit jedem der virtuellen Objekte (210) verknüpft ist.

17. Benutzerausrüstung (10) nach Anspruch 16, wobei die Kontextinformationen weiter ein Feld umfassen, das eine Kategorie von jedem der virtuellen Objekte (210) auflistet.

18. Benutzerausrüstung (10) nach Anspruch 17, wobei die CPU (40) Mittel zum Auswählen einer Untergruppe virtueller Objekte (210) innerhalb des ausgewählten Bereichs, der den Ort der Benutzerausrüstung (10) umgibt, nach der Kategorie umfasst.

19. Benutzerausrüstung (10) nach Anspruch 14, wobei eine Größe des ausgewählten Bereichs, der den Ort der Benutzerausrüstung (10) umgibt, von einer Bewegungsgeschwindigkeit der Benutzerausrüstung (10) abhängt.

20. Benutzerausrüstung (10) nach Anspruch 14, wobei eine Größe des ausgewählten Bereichs, der den Ort der Benutzerausrüstung (10) umgibt, von einer Dichte der virtuellen Objekte (210) abhängt.

21. Benutzerausrüstung (10) nach Anspruch 14, umfassend eine Ortsbestimmungseinrichtung (101) zur Verwendung beim Bestimmen eines Orts der Benutzerausrüstung (10).

22. Kontextkompasssystem zum Durchsuchen von und Zugreifen auf Kontextinformationen, umfassend:
- eine Datenbank (90), auf die durch ein drahtloses Netzwerk zugegriffen werden kann, wobei die Datenbank (80) Kontextinformationen umfasst, die realen Objekten entsprechen;
- eine Benutzerausrüstung (10) nach irgendeinem der Ansprüche 14, 15, 18, 19, 20 oder 21; und
- einen Ortsbestimmungsdienst (100), umfassend Mittel zum Bestimmen eines Orts der Benutzerausrüstung (10).

23. Kontextkompasssystem nach Anspruch 22, wobei die Datenbank (90) einen Namen, einen geographischen Ort und Informationen für jedes der virtuellen Objekte (210) umfasst.

24. Kontextkompasssystem nach Anspruch 23, wobei die Datenbank (90) weiter ein Feld umfasst, das eine Kategorie von jedem der virtuellen Objekte (210) auflistet.

25. Kontextkompasssystem nach Anspruch 23, wobei die Informationen für jedes der virtuellen Objekte (210) Inhalt, der sich auf jedes der virtuellen Objekte (210) bezieht, oder eine Adresse umfassen, die auf Inhalt verweist, der sich auf jedes der virtuellen Objekte (210) bezieht.

## Revendications

1. Procédé permettant de naviguer et d'accéder à des informations contextuelles avec un équipement utilisateur (10), lesdites informations contextuelles contenant des objets virtuels se rapportant à une zone entourant l'équipement utilisateur (10), ledit procédé comprenant les étapes consistant à :
déterminer (500) une localisation de l'équipement utilisateur (10) ;
déterminer une orientation de l'équipement utilisateur (10) ;
télécharger (510), au niveau de l'équipement utilisateur (10), des informations contextuelles contenant des objets virtuels (210) correspondant à des objets réels dans une zone sélectionnée entourant l'équipement utilisateur (10) à partir d'une base de données (90) accessible par l'intermédiaire d'un réseau (80) ;
générer (520) une interface utilisateur visuelle au niveau de l'équipement utilisateur (10) pour afficher les informations contextuelles téléchargées ;
sélectionner un des objets virtuels (210) dans un espace cible (26) de l'interface utilisateur visuelle, selon ladite orientation, l'espace cible (26) correspondant à une partie frontale de l'équipement utilisateur (10); et
ouvrir (540) l'objet virtuel sélectionné (210) en extrayant les informations contextuelles associées à l'objet virtuel sélectionné (210).

2. Procédé selon la revendication 1, dans lequel ladite étape consistant à télécharger les informations contextuelles comprend l'étape consistant à déterminer une taille de la zone sélectionnée entourant l'équipement utilisateur (10) en fonction d'au moins un élément parmi :
une vitesse de mouvement de l'équipement utilisateur (10) ; et
une densité d'objets virtuels (210).

3. Procédé selon la revendication 1 ou 2, comprenant en outre l'étape consistant à :
afficher (550) les informations contextuelles pour l'objet virtuel sélectionné (210).

4. Procédé selon la revendication 1 ou 2, comprenant en outre l'étape consistant à soumettre des critères pour des informations contextuelles à la base de données avant ledit téléchargement des informations contextuelles et dans lequel ledit téléchargement des informations contextuelles comprend le téléchargement uniquement d'objets virtuels sélectionnés (210) dans la zone sélectionnée entourant l'équipement utilisateur (10) qui correspondent aux critères soumis.

5. Procédé selon la revendication 3, dans lequel ladite génération de l'interface utilisateur visuelle comprend l'affichage d'un compas linéaire (200) dans l'interface utilisateur visuelle ayant un champ de vision et l'affichage des objets virtuels (210) sur le compas linéaire (200) à des positions correspondant à leur direction en fonction de la position de l'équipement utilisateur (10).

6. Procédé selon la revendication 5, dans lequel ledit affichage du compas linéaire (200) comprend l'affichage d'une direction devant l'équipement utilisateur (10) au centre du champ de vision.

7. Procédé selon la revendication 5, dans lequel ledit affichage du compas linéaire (200) comprend l'affichage du compas linéaire (200) sur un affichage porté sur la tête et permettant à un utilisateur de voir simultanément les objets virtuels (210) et le monde réel.

8. Procédé selon la revendication 3, comprenant en outre l'affichage d'une distance à partir de l'équipement utilisateur (10) jusqu'à l'objet réel correspondant à l'objet virtuel sélectionné (210).

9. Procédé selon la revendication 3, dans lequel ladite ouverture de l'objet virtuel sélectionné (210) comprend l'étape consistant à extraire des informations pour l'objet virtuel sélectionné (210) à partir de la base de données (90) dans le réseau (80).

10. Procédé selon la revendication 3, dans lequel ladite ouverture de l'objet virtuel sélectionné (210) comprend l'étape consistant à extraire des informations pour l'objet virtuel sélectionné (210) à partir d'une autre base de données (90) dans le réseau (80) et un ordinateur dans un autre réseau (95).

11. Procédé selon la revendication 3, dans lequel ladite ouverture de l'objet virtuel sélectionné (210) comprend l'étape consistant à extraire des informations pour l'objet virtuel sélectionné (210) en utilisant une adresse universelle ("URL") associée à l'objet virtuel sélectionné (210).

12. Procédé selon la revendication 1, dans lequel ledit téléchargement des informations contextuelles comprend le téléchargement d'informations contextuelles pour chaque objet réel comprend le téléchargement d'un nom de l'objet réel, d'une localisation géographique de l'objet réel et de contenu se rapportant à l'objet réel ou d'une adresse dirigeant vers du contenu se rapportant à l'objet réel.

13. Procédé selon la revendication 12, dans lequel ledit téléchargement des informations contextuelles comprend en outre le téléchargement d'un champ répertoriant une catégorie de chaque objet réel.

14. Equipement utilisateur (10) permettant de naviguer et d'accéder à des informations contextuelles stockées dans une base de données (90) accessible par l'intermédiaire d'un réseau sans fil, comprenant :
des moyens pour de la communication sans fil avec le réseau sans fil ;
un affichage (20) ;
un dispositif d'entrée (30) ;
un compas (50) pour déterminer une orientation de l'équipement utilisateur (10) ;
un processeur de transmission (CPU - "Communication Processor Unit) comprenant des moyens pour télécharger des informations contextuelles à partir de la base de données correspondant à des objets réels, lesdites données contextuelles comprenant des objets virtuels (210) se rapportant à des objets réels dans une zone sélectionnée entourant une localisation de l'équipement utilisateur (10), et des moyens pour afficher les objets virtuels (210) sur ledit affichage (20) en fonction d'une position de l'équipement utilisateur (10) ;
des moyens pour sélectionner un des objets virtuels (210) en fonction de l'orientation de l'équipement utilisateur (10), dans lequel l'objet virtuel sélectionné (210) est dans un espace cible (26) dans l'affichage (20) correspondant à une partie frontale de l'équipement utilisateur (10) ; et
des moyens pour accéder à l'objet virtuel sélectionné (210) en extrayant les informations contextuelles associées à l'objet virtuel sélectionné (210) et en affichant les informations contextuelles extraites sur l'affichage (20) en réponse à une mise en marche dudit dispositif d'entrée (30).

15. Equipement utilisateur (10) selon la revendication 14, dans lequel ledit équipement utilisateur (10) comprend un ordinateur portable et ledit affichage (20) comprend un afficheur facial permettant une vision simultanée des objets virtuels (210) et du monde réel.

16. Equipement utilisateur (10) selon la revendication 14, dans lequel lesdites informations contextuelles téléchargées comprennent un nom, une localisation géographique, et du contenu associé à chacun des objets virtuels (210) et une adresse dirigeant vers du contenu associé à chacun des objets virtuels (210).

17. Equipement utilisateur (10) selon la revendication 16, dans lequel lesdites informations contextuelles comprennent en outre un champ répertoriant une catégorie de chacun des objets virtuels (210).

18. Equipement utilisateur (10) selon la revendication 17, dans lequel ledit processeur de transmission CPU (40) comprend des moyens pour sélectionner un sous-groupe d'objets virtuels (210) à l'intérieur de la zone sélectionnée entourant la localisation dudit équipement utilisateur (10) au moyen de la catégorie.

19. Equipement utilisateur (10) selon la revendication 14, dans lequel une taille de ladite zone sélectionnée entourant la localisation dudit équipement utilisateur (10) dépend d'une vitesse de déplacement dudit équipement utilisateur (10).

20. Equipement utilisateur (10) selon la revendication 14, dans lequel une taille de ladite zone sélectionnée entourant la localisation dudit équipement utilisateur (10) dépend d'une densité desdits objets virtuels (210).

21. Equipement utilisateur (10) selon la revendication 14, comprenant un localisateur (101) destiné à être utilisé dans la détermination d'une localisation de l'équipement utilisateur (10).

22. Système de compas de contexte permettant de naviguer et d'accéder à des informations contextuelles, comprenant :
une base de données (90) accessible par l'intermédiaire d'un réseau sans fil, la base de données (80) comprenant des informations contextuelles correspondant à des objets réels ;
un équipement utilisateur (10) selon l'une quelconque des revendications 14, 15, 18, 19, 20 ou 21 ; et
un service de localisation (100) comprenant des moyens pour déterminer une localisation dudit équipement utilisateur (10)

23. Système de compas de contexte selon la revendication 22, dans lequel ladite base de donnée (90) comprend un nom, une localisation géographique et des informations pour chacun des objets virtuels (210).

24. Système de compas de contexte selon la revendication 23, dans lequel ladite base de données (90) comprend en outre un champ répertoriant une catégorie de chacun des objets virtuels (210).

25. Système de compas de contexte selon la revendication 23, dans lequel lesdites informations pour chacun des objets virtuels (210) comprennent du contenu se rapportant à chacun des objets virtuels (210) et une adresse dirigeant vers du contenu se rapportant à chacun des objets virtuels (210).
